# EUROPEAN PATENT SPECIFICATION

(11) **EP 4 289 650 B1**
(45) Date of publication and mention of the grant of the patent: **10.12.2025**
(21) Application number: 22382546.4
(22) Date of filing: 08.06.2022
(51) Int. Cl.: B60K 11/08

(54) **SHUTTER DEVICE FOR AN AIR INLET OF A VEHICLE**
VERSCHLUSSVORRICHTUNG FÜR EINEN LUFTEINLASS EINES FAHRZEUGES
DISPOSITIF D'OBTURATION POUR L'ADMISSION D'AIR D'UN VÉHICULE

(43) Date of publication of application: 13.12.2023
(73) Proprietor: Batz, S.Coop., 48140 Igorre (ES)
(72) Inventor: MAESTRE SERRANO, Asier, 48510 Valle de Trapaga - Trapagaran (ES)
(74) Representative: Galbaian S.Coop.

(56) References cited:
- WO-A1-2021/104992
- DE-A1- 102018 124 572
- FR-A1- 3 095 165

## Description

### TECHNICAL FIELD

The present invention relates to a shutter device for an air inlet of a vehicle, a vehicle incorporating said shutter device, and a detection method for detecting the absence of at least one flap which is applied in said shutter device.

### PRIOR ART

Active aerodynamic devices for vehicles are known. Said active aerodynamic devices allow the aerodynamics of the vehicle to be modified depending on the cooling needs of the vehicle, the speed at which it is travelling, etc., such that they successfully reduce the energy consumption of the vehicle and reduce the contaminating emissions of combustion vehicles and, in the case of electric vehicles, increase battery autonomy.

For example, shutter devices which allow the passage of air of an air inlet of the vehicle to be opened or closed are known. Shutter devices referred to as AGS, or active grille shutter, which are mainly arranged between the front grille and the engine of a vehicle or are arranged directly in the front of the vehicle, are generally used. In general, AGS shutter devices comprise a plurality of flaps that can pivot to a closed position and an open position.

It is also known that shutter devices of this type comprise a diagnostic system, also known as OBD, or on board diagnostics, which allows the absence of at least one flap of the shutter device to be detected.

On one hand, AGSs with OBDs in which movement of the actuator is transmitted to the flaps in a concatenated manner, such that if one of the flaps is missing, the concatenated movement is interrupted and said missing flap can be detected, are known. For example, DE102018218570A1 relates to an AGS with OBD comprising a master flap, a final flap and an intermediate flap. The master flap transmits the movement of the actuator to the final flap indirectly through the intermediate flap. The final flap has an associated stop element abutting with the frame when said final flap is arranged in the closed position or in the open position.

Similarly, DE102018124572A1 describes an AGS with OBD in which the movement of the actuator is transmitted to a master flap, the movement of the actuator being transmitted from said master flap to the rest of the flaps up to a lower end flap in a concatenated manner by means of connecting elements (U-shaped connecting elements in the first embodiment, gears in the second embodiment). When all the flaps are present, the movement of the actuator is transmitted to all the flaps and therefore the upper and lower end stops will be reached normally. If one flap and the corresponding connecting element are missing, the transmission of the movement is interrupted, and the lower end flap will not reach the lower end stop and therefore the torque of the actuator will be lower. In both cases, by monitoring the parameters of the actuator, it is possible to determine if a flap is missing.

On the other hand, AGSs with OBDs in which the movement of the actuator is transmitted to the flaps by means of a transmission part and in which the movement of the actuator is locked in the event of an absence of one of the flaps, are known. For example, DE102018131448A1 relates to an AGS with OBD, comprising one locking element per flap, said locking element being movable between a release position in which it allows the movement of the actuator and a locked position in which it locks the movement of the actuator, the locking element having a tendency for the locked position and being retained in the release position by each corresponding flap, such that if one of the flaps is missing, the corresponding locking element moves to the locked position, locking the movement of the actuator.

Similarly, WO2021/104992A1 describes an AGS with OBD comprising a master flap coupled to the actuator, all the flaps being coupled by a linkage such that all the flaps rotate together. In addition, each flap has an associated OBD disc which rotates in together with the corresponding flap . When all flaps rotate normally, the corresponding OBD discs do not interfere with each other. However, if one of the flaps is absent, the corresponding OBD disc remains stationary, so that when the present flaps rotate together with the corresponding OBD discs, at some point in their travel the OBD disc of the missing flap will collide with one of the adjacent OBD discs, blocking the possibility of further rotation of the adjacent OBD disc. The blocked OBD disc will prevent the corresponding flap from rotating, thereby blocking the rotation of the remaining flaps as they are all coupled by the linkage. This allows the OBD to detect the absence of a flap by not being able to reach the open or closed limit.

Lastly, DE102019119353A1 relates to an AGS with OBD in which the movement of the actuator is transmitted to the flaps by means of a transmission part, the AGS comprising a position element which cooperates with the flaps and is arranged in different positions depending on whether or not the flaps are present or, said position element cooperating with an element for detecting the position of the actuator.

### DISCLOSURE OF THE INVENTION

The object of the invention is to provide a shutter device for an air inlet of a vehicle, a vehicle incorporating said shutter device, and a detection method for detecting the absence of at least one flap which is applied in said shutter device, as defined in the claims.

A first aspect of the invention relates to a shutter device for an air inlet of a vehicle.

The shutter device comprises a frame, a first flap, a last flap and at least one intermediate flap pivotably coupled to said frame and configured to pivot between a closed position and an open position, an actuator, and a transmission part coupled to the flaps and configured to transmit the movement of the actuator to said flaps.

The shutter device also comprises a diagnostic system which allows the absence of at least one of the flaps to be detected during an evaluation process. The evaluation process is performed when the flaps pivot from the closed position to the open position and/or from the open position to the closed position. The diagnostic system comprises transmission elements associated with the flaps which cooperate with one another, causing a concatenated force transmission from the transmission element associated with the first flap to the transmission element associated with the last flap sequentially through the transmission elements associated with each of the intermediate flaps, the transmission element of the last flap comprising a stop element which, by means of the concatenated force transmission, prevents, at the end of the evaluation process, the movement of the actuator in the direction in which said actuator is rotating,, such that said diagnostic system detects the absence of at least one flap if the concatenated force transmission is interrupted or altered by the absence of the transmission element associated with said flap.

A second aspect of the invention relates to a vehicle incorporating a shutter device such as the one described in the first aspect of the invention.

A third aspect of the invention relates to a detection method for detecting the absence of at least one flap in a shutter device such as the one described in the first aspect of the invention.

In the detection method, the current and/or the torque of the actuator is monitored during the evaluation process, and an alarm signal is activated in the event that a current and/or torque peak is not observed when said actuator performs a pre-established rotation or a pre-established time interval lapses.

The diagnostic system formed by the transmission elements associated with the flaps is easy to manufacture and assemble. Furthermore, as a result of the simplicity of the system, problems during operation are avoided.

The fact that the transmission of the movement from the actuator to the flaps is done by means of the transmission part, and that the diagnostic system does not interfere with said transmission of the movement from the actuator to the flaps, allows the absence of at least one flap to be detected without having to disable or block the possibility that the rest of the flaps can continue to pivot, such that the shutter device continues to be functional even when a flap is missing, such that the diagnostic system allows said failure to be detected, maintaining the possibility to modify the aerodynamics of the vehicle with the advantages this entails.

The mode of generating said concatenated force transmission allows the diagnostic system to be applied in shutter devices comprising both a single opening and the shutter systems comprising two openings, where the flaps can be arranged both in the vertical direction and in the horizontal direction.

These and other advantages and features of the invention will become apparent in view of the figures and of the detailed description of the invention.

### DESCRIPTION OF THE DRAWINGS

Figure 1 shows a perspective view of the shutter device according to a first embodiment of the invention, wherein the flaps are in the closed position.
Figure 2 shows a first perspective view of the shutter device of Figure 1, wherein the flaps are in the open position.
Figure 3 shows a second perspective view of the shutter device of Figure 1, wherein the flaps are in the open position.
Figure 4 shows a partial view of the shutter device of Figure 1, wherein the flaps are in the open position.
Figure 5 shows a second partial view of the shutter device of Figure 1, wherein the flaps are in the open position.
Figure 6 shows a perspective view of the frame of the shutter device of Figure 1.
Figure 7 shows a partial section view of the transmission system of the shutter device of Figure 1 when the flaps are in the closed position.
Figure 8 shows a partial section view of the transmission system of the shutter device of Figure 1 when the flaps are in the open position.
Figure 9 shows a perspective view of the shutter device of Figure 1, wherein one of the intermediate flaps is missing.
Figure 10 shows a partial section view of the transmission system of the shutter device when the flaps are in the situation shown in Figure 9.
Figure 11 shows a perspective view of the shutter device according to a second embodiment of the invention, wherein the flaps are in the closed position.
Figure 12 shows a perspective view of the flaps of the shutter device of Figure 11.
Figure 13 shows a perspective view of the frame of the shutter device of Figure 11.
Figure 14 shows a detailed partial view of the shutter device of Figure 11, wherein the flaps are in the closed position.
Figure 15 shows a partial section view of the shutter device of Figure 11, wherein the flaps are in the closed position.
Figure 16 shows a partial perspective view of the shutter device of Figure 11, with the flaps in the open position.
Figure 17 shows a partial perspective view of the shutter device of Figure 11, wherein one of the flaps of the first opening is missing.
Figure 18 shows a partial perspective view of the shutter device of Figure 11, wherein one of the flaps of the second opening is missing.
Figure 19 shows a partial perspective view of the shutter device of Figure 11, wherein one of the flaps of the first opening is uncoupled from the transmission part.
Figure 20 shows a partial perspective view of the shutter device of Figure 11, wherein one of the flaps of the first opening is in the process of being uncoupled from the frame.

### DETAILED DISCLOSURE OF THE INVENTION

A first aspect of the invention relates to a shutter device 1 for an air inlet of a vehicle.

The shutter device is preferably an AGS which is configured to be arranged between the front grille and the engine of a vehicle, or to be arranged directly in the front part of the vehicle. In other possible embodiments, the shutter device can be arranged in any other air inlet of the vehicle, such as for example in an active wheel arch.

The shutter device 1 comprises a frame 2 and a plurality of flaps 30, 31, 32, 33, 34, 35, 36, 37, 38, 39 pivotably coupled to said frame 2 and configured to pivot between a closed position, in which the passage of air through said shutter device 1 is not allowed, and an open position in which the passage of air is allowed. The flaps 30, 31, 32, 33, 34, 35, 36, 37, 38, 39 are preferably manufactured in plastic, or in reinforced plastic, more preferably in fiber-reinforced plastic, such as glass fiber-reinforced polypropylenes or polyamides. The frame 2 is preferably manufactured in plastic, reinforced plastic, or in an organosheet material, more preferably in glass fiber-reinforced polypropylene. In other embodiments not shown in the figures, the frame can be integrated inside the front-end-carrier. In other possible embodiments, the frame could be modular or could be formed by extruded profiles. The shutter device preferably comprises between three and 10 flaps.

The shutter device 1 also comprises an actuator 5, and a transmission part 4 coupled to the flaps 30, 31, 32, 33, 34, 35, 36, 37, 38, 39 and configured to transmit the movement of the actuator 5 to said flaps 30, 31, 32, 33, 34, 35, 36, 37, 38, 39. The actuator 5 is preferably connected to one of the flaps 30, said flap 30 being the master flap, the movement of the actuator 5 being transferred to the rest of the flaps 31, 32, 33, 34, 35, 36, 37, 38, 39 through the transmission part 4 which is coupled to all the flaps 30, 31, 32, 33, 34, 35, 36, 37, 38, 39. The actuator 5 preferably has to rotate ninety degrees for the flaps 30, 31, 32, 33, 34, 35, 36, 37, 38, 39 to transition from the closed position to the open position, such that the normal range of rotation of the actuator 5 is between zero and ninety degrees. In the context of the invention, the normal range of rotation of the actuator 5 is considered the range in which the actuator 5 rotates for the flaps 30, 31, 32, 33, 34, 35, 36, 37, 38, 39 to pivot between the closed position and the open position. The actuator 5 is preferably configured to be stopped once a pre-established maximum rotation, for example 120 degrees, has been surpassed. In other possible embodiments, the normal range of rotation of the actuator, as well as the maximum rotation of the actuator, can be different. The actuator is preferably a smart actuator, for example a stepper or BLDC (brushless DC).

The shutter device 1 comprises a diagnostic system which allows the absence of at least one of the flaps 30, 31, 32, 33, 34, 35, 36, 37, 38, 39 to be detected during an evaluation process which is performed when the flaps 30, 31, 32, 33, 34, 35, 36, 37, 38, 39 pivot from the closed position to the open position and/or from the open position to the closed position. The evaluation process is preferably performed when the flaps 30, 31, 32, 33, 34, 35, 36, 37, 38, 39 pivot from the closed position to the open position. The evaluation process is more preferably performed as part of the calibration process for the shutter device 1, said calibration process being a process which is executed when starting up the vehicle and periodically while the vehicle is running.

The diagnostic system comprises transmission elements 60, 61, 62, 63, 64, 65, 66, 67, 68, 69 associated with the flaps 30, 31, 32, 33, 34, 35, 36, 37, 38, 39 which cooperate with one another, causing a concatenated force transmission, such that said diagnostic system detects the absence of at least one flap 30, 31, 32, 33, 34, 35, 36, 37, 38, 39 when the concatenated force transmission is interrupted or altered by the absence of the transmission element 60, 61, 62, 63, 64, 65, 66, 67, 68, 69 associated with said flap 30, 31, 32, 33, 34, 35, 36, 37, 38, 39.

The diagnostic system comprises a stop element which, by means of the concatenated force transmission, prevents, at the end of the evaluation process, the movement of the actuator 5 in the direction in which said actuator 5 is rotating. The stop element more preferably prevents, at the end of the evaluation process, the movement of the actuator 5 in the direction in which said actuator 5 is rotating by pressing on a stop 20 of the frame 2.

Therefore, the transmission elements 60, 61, 62, 63, 64, 65, 66, 67, 68, 69 cooperate with one another such that, if all the flaps 30, 31, 32, 33, 34, 35, 36, 37, 38, 39 are present during the evaluation process, the concatenated force transmission causes a chain action-reaction passing through all the transmission elements 60, 61, 62, 63, 64, 65, 66, 67, 68, 69 until reaching the stop element which indirectly prevents the actuator 5 from continuing to rotate, therefore causing a current/torque peak of said actuator 5. However, if, during the evaluation process, one of the flaps 30, 31, 32, 33, 34, 35, 36, 37, 38, 39 is absent, the chain reaction is interrupted or modified. In the event that the chain reaction is interrupted, the concatenated force transmission does not reach the stop element and, therefore, said stop element does not prevent the actuator 5 from being able to continue rotating once the flaps 30, 31, 32, 33, 34, 35, 36, 37, 38, 39 have pivoted to the desired position in the evaluation process. In this case, the current/torque of the actuator 5 will not have a peak within the normal range of rotation of the actuator 5, said missing peak indicating the absence of at least one flap 30, 31, 32, 33, 34, 35, 36, 37, 38, 39. In the event that the chain reaction is not interrupted but is modified, the concatenated force transmission can reach the stop element but after the actuator 5 has rotated more than what is needed for the flaps 30, 31, 32, 33, 34, 35, 36, 37, 38, 39 to reach the desired position at the end of the evaluation process, and therefore the current/torque peak of the actuator 5 will be produced outside the normal range of rotation of the actuator 5, said peak outside the normal range of rotation indicating the absence of at least one flap 30, 31, 32, 33, 34, 35, 36, 37, 38, 39.

As an alternative to the stop element, in an embodiment that is not part of the invention, the diagnostic system may comprise a resistive element which, by means of the concatenated force transmission, hinders the movement of the actuator during the evaluation process such that said difficulty translates into a given current/torque profile of the actuator during the evaluation process, such that the absence of at least one flap can be detected by observing the current/torque profile of the actuator during the evaluation process.

The shutter device 1 comprises a first flap 30, a last flap 31 and at least one intermediate flap 32, 33, 34, 35, 36, 37, 38, 39, such that the concatenated force transmission occurs from the transmission element 60 associated with the first flap 30 to the transmission element 61 associated with the last flap 31 sequentially through the transmission elements 62, 63, 64, 65, 66, 67, 68, 69 associated with each of the intermediate flaps 32, 33, 34, 35, 36, 37, 38, 39, the transmission element 61 of the last flap 31 comprising the stop element.

The transmission element 60 of the first flap 30 is preferably integral with said first flap 30, and the transmission elements 61, 62, 63, 64, 65, 66, 67, 68, 69 of the rest of the flaps 31, 32, 33, 34, 35, 36, 37, 38, 39 are pivotably coupled to the respective flap 31, 32, 33, 34, 35, 36, 37, 38, 39, i.e., the transmission element 61 of the last flap 31 and the transmission elements 62, 63, 64, 65, 66, 67, 68, 69 of the intermediate flaps 32, 33, 34, 35, 36, 37, 38, 39 do not pivot together with the respective flap 31, 32, 33, 34, 35, 36, 37, 38, 39, and therefore the movement thereof is uncoupled from the movement of the actuator 5. The transmission element 60 of the first flap 30 is preferably integral with said first flap 30. The rest of the transmission elements 61, 62, 63, 64, 65, 66, 67, 68, 69 are preferably of the same type, facilitating the manufacture thereof. The transmission elements 61, 62, 63, 64, 65, 66, 67, 68, 69 of the intermediate flaps 32, 33, 34, 35, 36, 37, 38, 39 and the final flap 31 preferably comprise a central hole, each transmission element 61, 62, 63, 64, 65, 66, 67, 68, 69 being coupled directly to one of the ends of respective flap 31, 32, 33, 34, 35, 36, 37, 38, 39. In other possible embodiments, not shown in the figures, the transmission system may comprise additional transmission elements arranged between the transmission elements associated with the flaps, said additional transmission elements cooperating in the concatenated force transmission.

The transmission element 60 of the first flap 30 preferably comprises an arm with an actuating surface 601, and the transmission elements 61, 62, 63, 64, 65, 66, 67, 68, 69 of the rest of the flaps 31, 32, 33, 34, 35, 36, 37, 38, 39 comprise an arm with an actuated surface 610, 620, 630, 640, 650, 660, 670, 680, 690 and an actuating surface 611, 621, 631, 641, 651, 661, 671, 681, 691, the actuating surfaces 601, 611, 621, 631, 641, 651, 661, 671, 681, 691 of the transmission elements 60, 61, 62, 63, 64, 65, 66, 67, 68, 69 acting on the actuated surface 610, 620, 630, 640, 650, 660, 670, 680, 690 of the following transmission element 61, 62, 63, 64, 65, 66, 67, 68, 69, and the actuating surface 611 of the last flap 31 being the stop element. The actuating surfaces 621, 631, 641, 651, 661, 671, 681, 691 of the transmission elements 62, 63, 64, 65, 66, 67, 68, 69 of the intermediate flaps 32, 33, 34, 35, 36, 37, 38, 39 are preferably arranged in permanent contact with and at least partially overlapping the actuated surface 610, 620, 630, 640, 650, 660, 670, 680, 690 of the transmission element 61, 62, 63, 64, 65, 66, 67, 68, 69 of the following flap 31, 32, 33, 34, 35, 36, 37, 38, 39, regardless of whether the flaps 31, 32, 33, 34, 35, 36, 37, 38, 39 are in the open or closed position. In the same way, the actuating surface 611 of the transmission element 61 of the last flap 31 is preferably arranged in permanent contact with the stop 20 of the frame 2. As described above, the transmission element 60 of the first flap 30 preferably pivots integrally with said first flap 30, causing the concatenated force transmission when the actuating surface 601 of the transmission element 60 of the first flap 30 reaches and presses on the actuated surface 620 of the intermediate flap 32 arranged after the first flap 30.

The frame 2 preferably comprises an upper side 200, a lower side 201, a first side 202 and a second side 203. The frame 2 preferably comprises a single opening 205, the flaps 30, 31, 32, 33, 34 preferably being arranged in the horizontal direction with a first end 300, 310, 320, 330, 340 pivotably coupled to a first respective hole 21 of the first side 21 of the frame 2 and a second end 301, 311, 321, 331, 341 pivotably coupled to a second respective hole 22 of the first side 21 of the frame 2. Alternatively, the frame 2 may comprise a vertical central column 204 such that the frame 2 comprises two openings 205, 206. Therefore, a first group of flaps 31, 32, 34, 36, 38 is preferably arranged in the horizontal direction with a first end 310, 320, 340, 360, 380 pivotably coupled to a fourth hole 24 of a second wall of the central column 204 of the frame 2 and a second end 311, 321, 341, 361, 381 pivotably coupled to a second respective hole 22 of the second side 203 of the frame 2, and a second group of flaps 30, 33, 35, 37, 39 is arranged in the horizontal direction with a first end 300, 330, 350, 370, 390 pivotably coupled to a third hole 23 of a first wall of the central column 204 of the frame 2 and a second end 301, 331, 351, 371, 391 pivotably coupled to a first respective hole 22 of the first side 202 of the frame 2. Alternatively, regardless of the number of openings comprised in the frame, the flaps could be arranged in the vertical direction with a first end pivotably coupled to the lower side of the frame and a second end pivotably coupled to the upper side of the frame 2.

Preferably, if a flap 30, 31, 32, 33, 34, 35, 36, 37, 38, 39 is uncoupled from the transmission part 4, said flap 30, 31, 32, 33, 34, 35, 36, 37, 38, 39, due to its weight distribution with respect to the pivoting shaft of the flap 30, 31, 32, 33, 34, 35, 36, 37, 38, 39, pivots due to the effect of gravity to an angular position in which the second end 301, 311, 321, 331, 341, 351, 361, 371, 381, 391 of the shaft of the flap 30, 31, 32, 33, 34, 35, 36, 37, 38, 39 is housed in a respective slot 220, causing an inclination of the flap 30, 31, 32, 33, 34, 35, 36, 37, 38, 39 causing it to be uncoupled from the frame 2, 2, the diagnostic system detecting the absence of said flap 30, 31, 32, 33, 34, 35, 36, 37, 38, 39. The shutter device 1 thereby allows the uncoupling of a flap 30, 31, 32, 33, 34, 35, 36, 37, 38, 39 from the transmission part 4, causing said flap 30, 31, 32, 33, 34, 35, 36, 37, 38, 39 to be uncoupled from the frame 2, to be detected.

A second aspect of the invention relates to a vehicle comprising a shutter device 1 such as the one described above.

A third aspect of the invention relates to a detection method for detecting the absence of at least one flap 30, 31, 32, 33, 34, 35, 36, 37, 38, 39 of a shutter device 1 such as the one described above. In the detection method, the concatenated force transmission by means of the current and/or the torque of the actuator 5 is monitored indirectly during the evaluation process.

In the detection method, an alarm signal is preferably activated in the event that a current and/or torque peak is not observed when said actuator 5 performs a pre-established rotation, i.e., within the normal range of rotation of the actuator, or a pre-established time interval lapses.

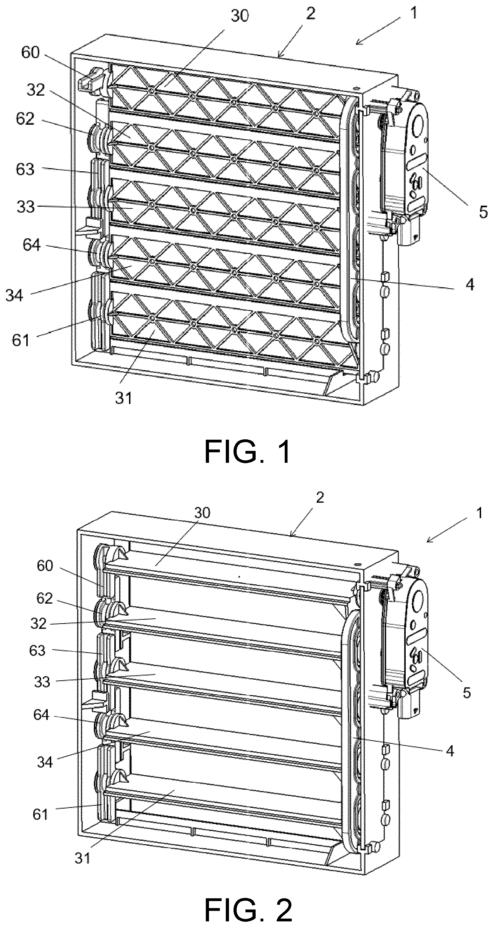

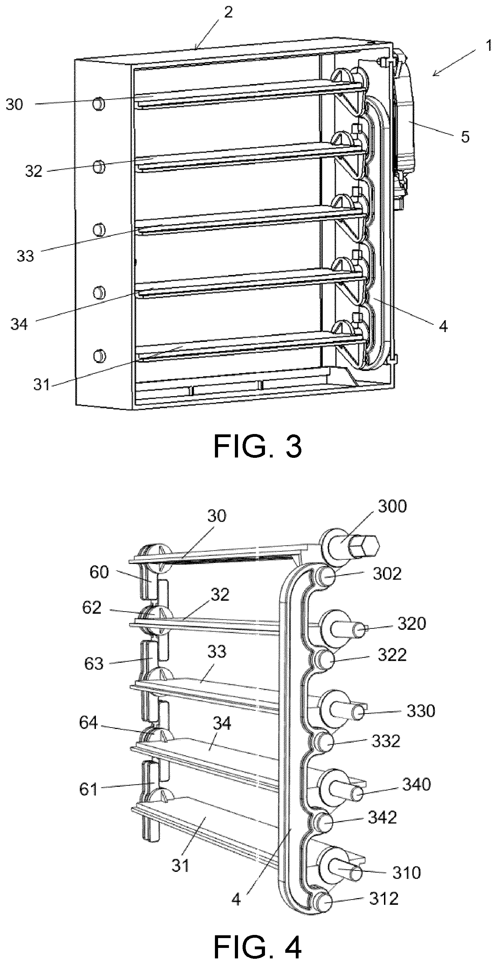

Figures 1 to 10 show a first embodiment of the shutter device according to the invention.

In this first embodiment, the shutter device 1 comprises a first flap 30, a last flap 31 and three intermediate flaps 32, 33, 34. The shutter device 1 also comprises a frame 2, the flaps 30, 31, 32, 33, 34 being arranged such that they are pivotably coupled to said frame 2. The flaps 30, 31, 32, 33, 34 are configured to pivot between a closed position, shown in Figure 1, and an open position, shown in Figure 2.

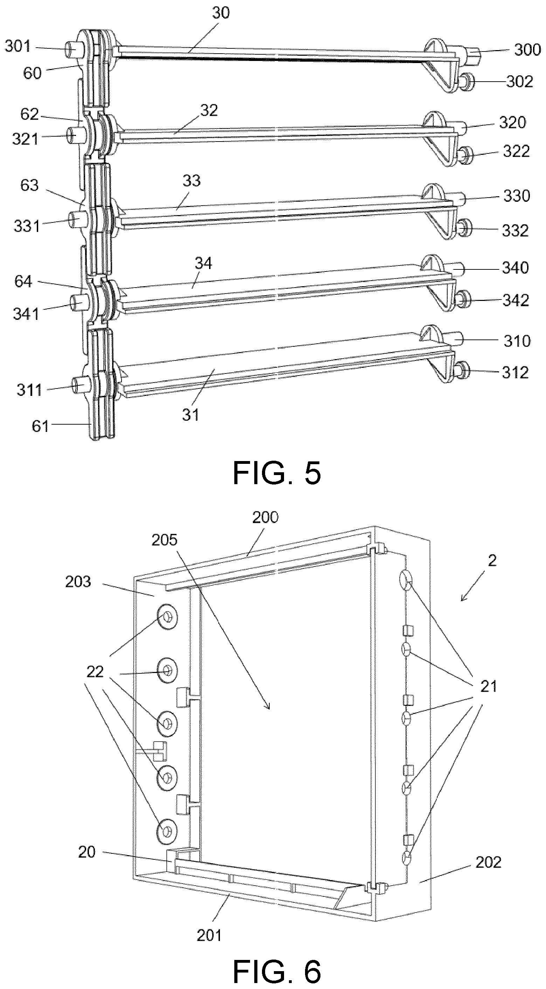

The frame 2 of this first embodiment, shown in detail in Figure 6, comprises an upper side 200, a lower side 201, a first side 202 and a second side 203. Therefore, the frame 2 comprises a single opening 205, the flaps 30, 31, 32, 33, 34 being arranged in the horizontal direction with a first end 300, 310, 320, 330, 340 pivotably coupled to a first respective hole 21 of the first side 21 of the frame 2 and a second end 301, 311, 321, 331, 341 pivotably coupled to a second respective hole 22 of the first side 21 of the frame 2.

In this first embodiment, the shutter device 1 also comprises an actuator 5 and a transmission part 4 coupled to the flaps 30, 31, 32, 33, 34. In this first embodiment, the actuator 5 is connected to the first flap 30, said first flap 30 being the master flap, the movement of the actuator 5 being transferred to the rest of the flaps 31, 32, 33, 34 through the transmission part 4 which is coupled to all the flaps 30, 31, 32, 33, 34. In this first embodiment, each flap 30, 31, 32, 33, 34 comprises a respective pin 302, 312, 322, 332, 342 configured to be coupled to a respective hook of the transmission part 4.

In this first embodiment, the actuator 5 has to rotate ninety degrees for the flaps 30, 31, 32, 33, 34 to transition from the closed position to the open position, such that the normal range of rotation of the actuator 5 is between zero and ninety degrees. Furthermore, the actuator 5 is preferably configured to be stopped once a pre-established maximum rotation, preferably 120 degrees, has been surpassed.

The shutter device 1 of this first embodiment also comprises a diagnostic system which allows the absence of at least one of the flaps 30, 31, 32, 33, 34 to be detected during an evaluation process which is performed when the flaps 30, 31, 32, 33, 34 pivot from the closed position to the open position. The evaluation process is preferably performed as part of the calibration process for the shutter device, said calibration process being a process which is executed when starting up the vehicle and periodically while the vehicle is running.

The diagnostic system of this first embodiment comprises transmission elements 60, 61, 62, 63, 64 associated with the flaps 30, 31, 32, 33, 34 which cooperate with one another, causing a concatenated force transmission, such that said diagnostic system detects the absence of at least one flap 30, 31, 32, 33, 34 when the concatenated force transmission is interrupted or altered by the absence of the transmission element 60, 61, 62, 63, 64 associated with said flap 30, 31, 32, 33, 34.

In this first embodiment, each transmission element 60, 61, 62, 63, 64 is arranged at the second end 301, 311, 321, 331, 341 of the respective flap 30, 31, 32, 33, 34.

In this first embodiment, the diagnostic system also comprises a stop element which, by means of the concatenated force transmission, prevents, at the end of the evaluation process, the movement of the actuator 5 in the direction in which said actuator 5 is rotating by pressing on a stop 20 of the frame 2.

In this first embodiment, the concatenated force transmission occurs from the transmission element 60 associated with the first flap 30 to the transmission element 61 associated with the last flap 31 sequentially through the transmission elements 62, 63, 64 associated with each of the intermediate flaps 32, 33, 34. The transmission element 61 of the last flap 31 comprises the stop element.

Therefore, in this first embodiment, the transmission element 60 of the first flap 30 is integral with said first flap 30, and the transmission elements 61, 62, 63, 64 of the rest of the flaps 31, 32, 33, 34 are pivotably coupled to the respective flap 31, 32, 33, 34, i.e., they do not pivot together with the respective flap 31, 32, 33, 34, and therefore the movement thereof is uncoupled from the movement of the actuator 5.

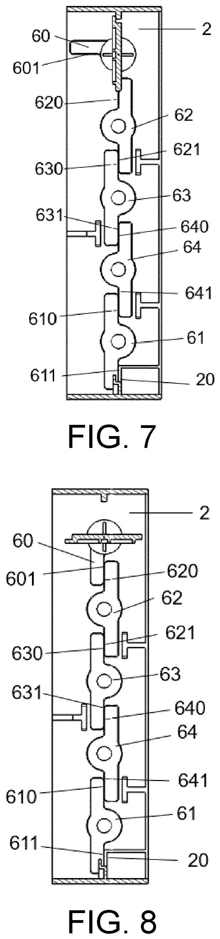

In this first embodiment, as shown in detail in Figures 7 and 8, the transmission element 60 of the first flap 30 comprises an arm with an actuating surface 601, and the transmission elements 61, 62, 63, 64 of the rest of the flaps 31, 32, 33, 34 comprise an arm with an actuated surface 610, 620, 630, 640 and an actuating surface 611, 621, 631, 641, the actuating surfaces 601, 611, 621, 631, 641, of the transmission elements 60, 61, 62, 63, 64 acting on the actuated surface 610, 620, 630, 640 of the following transmission element 61, 62, 63, 64, and the actuating surface 611 of the last flap 31 being the stop element. Therefore, the transmission elements 60, 61, 62, 63, 64 cooperate with one another such that, if all the flaps 30, 31, 32, 33, 34 are present during the evaluation process, the concatenated force transmission causes a chain action-reaction passing through all the transmission elements 60, 61, 62, 63, 64 until reaching the stop element pressing on the stop 20 of the frame 2, indirectly preventing the actuator 5 from continuing to rotate, therefore causing a current/torque peak of said actuator 5.

Therefore, in the event that all the flaps are present during the evaluation process, as shown in Figures 7 and 8, when the flaps transition from a closed position, the situation shown in Figure 7, to an open position, the situation shown in Figure 8, the transmission element 60 associated with the first flap 30 rotates together with said first flap 30 such that it pivots ninety degrees, the actuating surface 601 of the transmission element 60 of the first flap 30 pressing at the end of said path on the actuated surface 620 of the transmission element 62 associated with the following flap 32, the actuating surface 621 of said transmission element 62 pressing on the actuated surface 630 of the transmission element 63 of the following flap 33, the actuating surface 631 of said transmission element 63 pressing on the actuated surface 640 of the transmission element 64 of the following flap 34, and the actuating surface 641 of said transmission element 64 pressing on the actuated surface 610 of the transmission element 61 of the last flap 31, such that the actuating surface 611 of the transmission element 61 of said last flap 31, which is the stop element of the diagnostic system, presses on the stop 20 of the frame 2. When the actuating surface 611 of the transmission element 61 of the last flap presses on the stop 20 of the frame 2, the movement of the actuator 5 in the direction in which said actuator 5 is rotating is prevented, since the transmission element 60 associated with the first flap 30 cannot continue to rotate in said direction due to the fact that the cooperation between the different transmission elements 60, 61, 62, 63, 64 prevents this, and since the rotation of the first transmission element 60 is integral with the rotation of the first flap 30, said first flap 30 cannot continue to rotate either, and since all the flaps are coupled by means of the transmission part 4 none of the flaps 30, 31, 32, 33, 34 can continue to rotate, therefore causing a current/torque peak of said actuator 5.

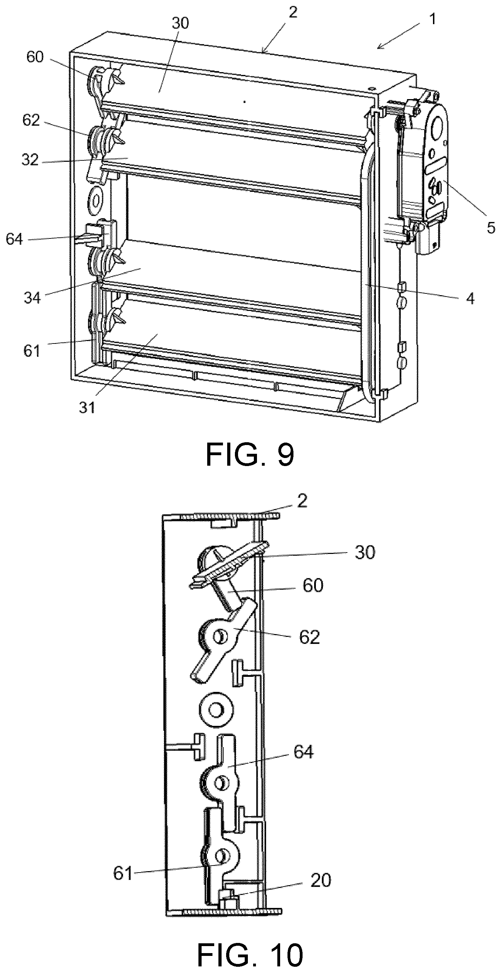

However, if, during the evaluation process, one of the flaps 30, 31, 32, 33, 34 is absent, the chain reaction is interrupted or modified. Figures 9 and 10 show a situation in which one of the intermediate flaps 33 is missing, and therefore the transmission element 63 associated with said intermediate flap 33 is also missing. In this situation, when the flaps 30, 31, 32, 34 transition from a closed position to an open position, the transmission element 60 associated with the first flap 30 rotates together with said first flap 30 such that upon pivoting ninety degrees, the actuating surface 601 of the transmission element 60 of the first flap 30 pushes on the actuated surface 620 of the transmission element 62 associated with the following flap 32. However, in the absence of the transmission element 63 associated with the following flap 33, the concatenated force transmission is lost at this point, such that the actuating surface 611 of the transmission element 61 of the last flap does not press on the stop 20 of the frame 2 when the actuator 5 rotates ninety degrees, and therefore said actuator 5 can continue to rotate beyond the normal range of rotation of the actuator 5. In this case, the current/torque of the actuator 5 will not have a peak within the normal range of rotation of the actuator 5, said missing peak indicating the absence of at least one flap 30, 31, 32, 33, 34.

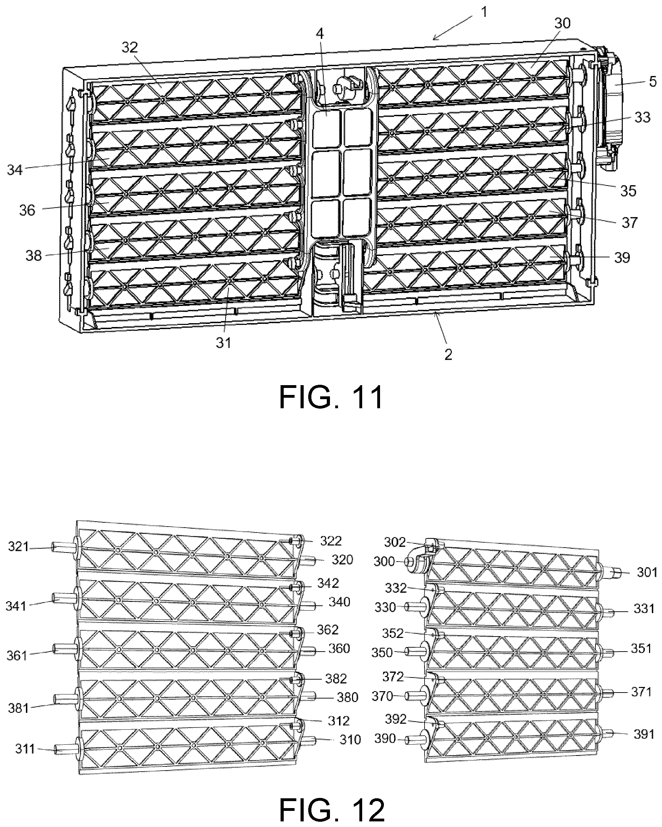

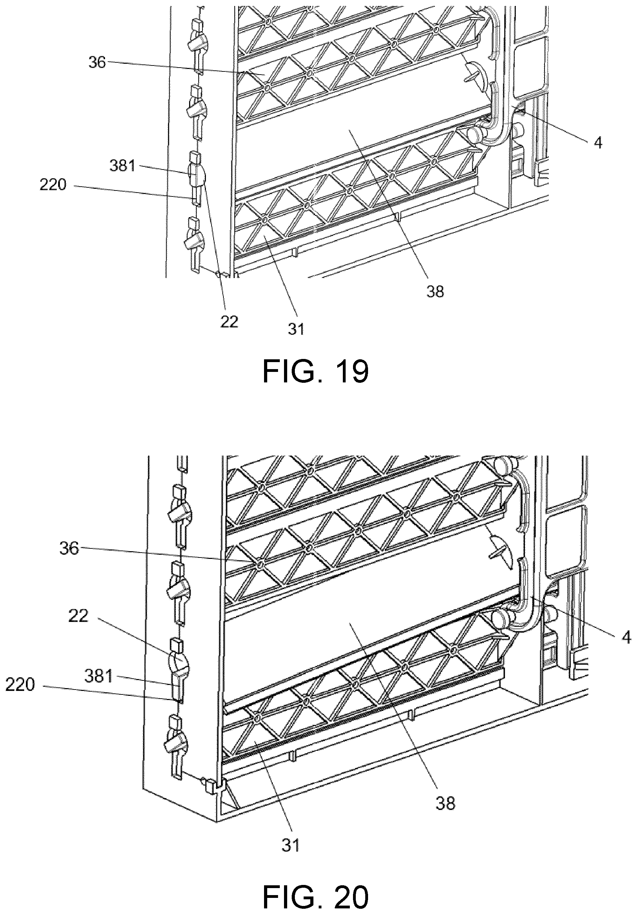

Figures 11 to 20 show a second embodiment of the shutter device according to the invention.

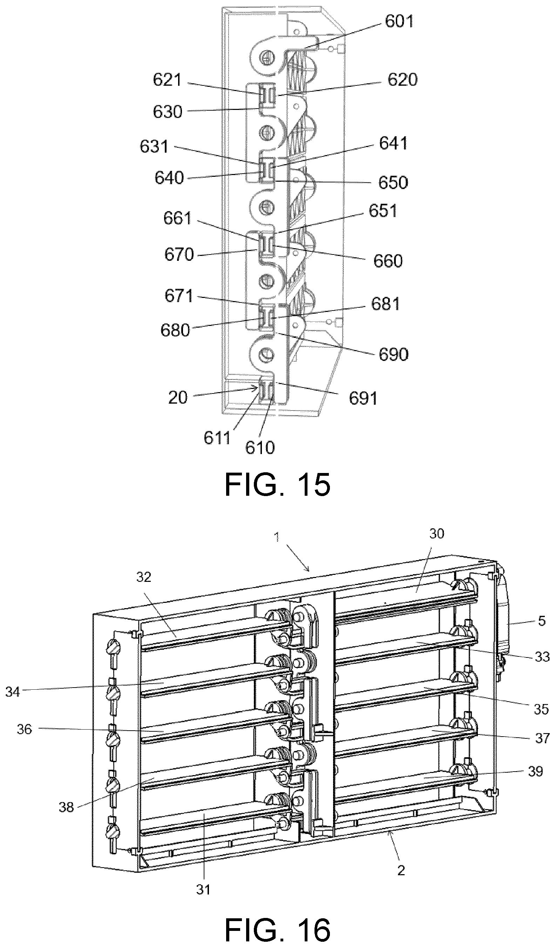

In this second embodiment, the shutter device 1 comprises the first flap 30, a last flap 31 and eight intermediate flaps 32, 33, 34, 35, 36, 37, 38, 39. The shutter device 1 also comprises a frame 2, the flaps 30, 31, 32, 33, 34, 35, 36, 37, 38, 39 being arranged such that they are pivotably coupled to said frame 2. The flaps 30, 31, 32, 33, 34, 35, 36, 37, 38, 39 are configured to pivot between a closed position, shown in Figure 11, and an open position, shown in Figure 16.

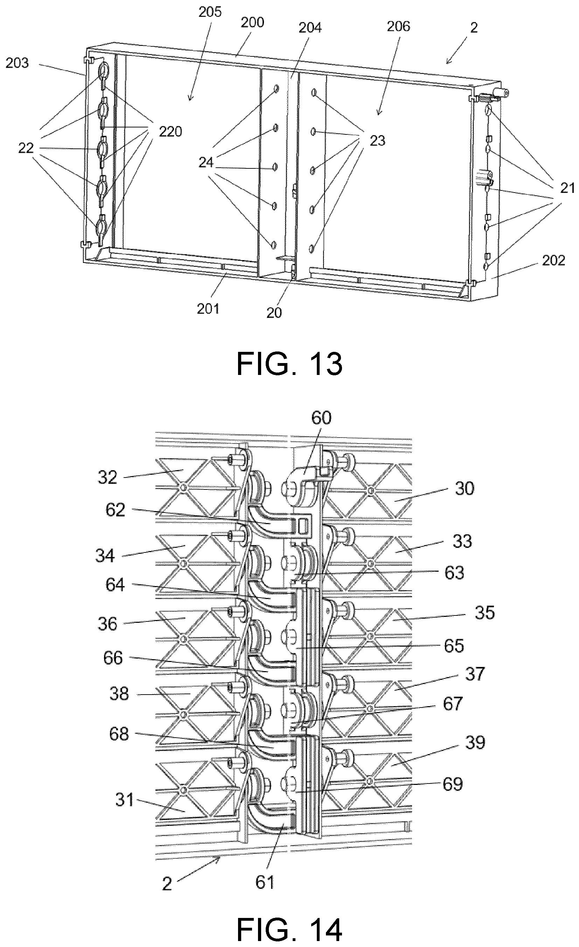

The frame 2 of this second embodiment, shown in detail in Figure 13, comprises an upper side 200, a lower side 201, a first side 202, a second side 203 and a central column 204, such that the frame 2 comprises two openings 204, 205. Therefore, a first group of flaps 31, 32, 34, 36, 38 is preferably arranged in the horizontal direction with a first end 310, 320, 340, 360, 380 pivotably coupled to a fourth hole 24 of a second wall of the central column 204 of the frame 2 and a second end 311, 321, 341, 361, 381 pivotably coupled to a second respective hole 22 of the second side 203 of the frame 2, and a second group of flaps 30, 33, 35, 37, 39 is arranged in the horizontal direction with a first end 300, 330, 350, 370, 390 pivotably coupled to a third hole 23 of a first wall of the central column 204 of the frame 2 and a second end 301, 331, 351, 371, 391 pivotably coupled to a first respective hole 22 of the first side 202 of the frame 2.

In this second embodiment, the shutter device 1 also comprises an actuator 5 and a transmission part 4 coupled to the flaps 30, 31, 32, 33, 34, 35, 36, 37, 38, 39. In this second embodiment, the actuator 5 is connected to the first flap 30, said first flap 30 being the master flap, the movement of the actuator 5 being transferred to the rest of the flaps 31, 32, 33, 34, 35, 36, 37, 38, 39 through the transmission part 4 which is coupled to all the flaps 30, 31, 32, 33, 34, 35, 36, 37, 38, 39. In this second embodiment, each flap 30, 31, 32, 33, 34, 35, 36, 37, 38, 39 comprises a respective pin 302, 312, 322, 332, 342, 352, 362, 372, 382, 392 configured to be coupled to a respective hook of the transmission part 4.

In this second embodiment, the actuator 5 has to rotate ninety degrees for the flaps 30, 31, 32, 33, 34, 35, 36, 37, 38, 39 to transition from the closed position to the open position, such that the normal range of rotation of the actuator 5 is between zero and ninety degrees. Furthermore, the actuator 5 is preferably configured to be stopped once a pre-established maximum rotation, preferably 120 degrees, has been surpassed.

The shutter device 1 of this second embodiment also comprises a diagnostic system which allows the absence of at least one of the flaps 30, 31, 32, 33, 34, 35, 36, 37, 38, 39 to be detected during an evaluation process which is performed when the flaps 30, 31, 32, 33, 34, 35, 36, 37, 38, 39 pivot from the closed position to the open position. The evaluation process is preferably performed as part of the calibration process for the shutter device, said calibration process being a process which is executed when starting up the vehicle and periodically while the vehicle is running.

The diagnostic system of this second embodiment comprises transmission elements 60, 61, 62, 63, 64, 65, 66, 67, 68, 69 associated with the flaps 30, 31, 32, 33, 34, 35, 36, 37, 38, 39 which cooperate with one another, causing a concatenated force transmission, such that said diagnostic system detects the absence of at least one flap 30, 31, 32, 33, 34, 35, 36, 37, 38, 39 when the concatenated force transmission is interrupted or altered by the absence of the transmission element 60, 61, 62, 63, 64, 65, 66, 67, 68, 69 associated with said flap 30, 31, 32, 33, 34, 35, 36, 37, 38, 39.

In this second embodiment, each transmission element 60, 61, 62, 63, 64, 65, 66, 67, 68, 69 is arranged at the first end 300, 310, 320, 330, 340, 350, 360, 370, 380, 390 of the respective flap 30, 31, 32, 33, 34, 35, 36, 37, 38, 39.

In this second embodiment, the diagnostic system also comprises a stop element which, by means of the concatenated force transmission, prevents, at the end of the evaluation process, the movement of the actuator 5 in the direction in which said actuator 5 is rotating by pressing on a stop 20 of the frame 2.

In this second embodiment, the concatenated force transmission occurs from the transmission element 60 associated with the first flap 30 to the transmission element 61 associated with the last flap 31 sequentially through the transmission elements 62, 63, 64, 65, 66, 67, 68, 69 associated with each of the intermediate flaps 32, 33, 34, 35, 36, 37, 38, 39. The transmission element 61 of the last flap 31 comprises the stop element.

Therefore, in this second embodiment, the transmission element 60 of the first flap 30 is integral with said first flap 30, and the transmission elements 61, 62, 63, 64, 65, 66, 67, 68, 69 of the rest of the flaps 31, 32, 33, 34, 35, 36, 37, 38, 39 are pivotably coupled to the respective flap 31, 32, 33, 34, 35, 36, 37, 38, 39, i.e., they do not pivot together with the respective flap 31, 32, 33, 34, 35, 36, 37, 38, 39, and therefore the movement thereof is uncoupled from the movement of the actuator 5.

In this second embodiment, as shown in detail in Figure 15, the transmission element 60 of the first flap 30 comprises an arm with an actuating surface 601, and the transmission elements 61, 62, 63, 64, 65, 66, 67, 68, 69 of the rest of the flaps 31, 32, 33, 34, 35, 36, 37, 38, 39 comprise an arm with an actuated surface 610, 620, 630, 640, 650, 660, 670, 680, 690 and an actuating surface 611, 621, 631, 641, 651, 661, 671, 681, 691, the actuating surfaces 601, 611, 621, 631, 641, 651, 661, 671, 681, 691 of the transmission elements 60, 61, 62, 63, 64, 65, 66, 67, 68, 69 acting on the actuated surface 610, 620, 630, 640, 650, 660, 670, 680, 690 of the following transmission element 61, 62, 63, 64, 65, 66, 67, 68, 69, and the actuating surface 611 of the last flap 31 being the stop element. Therefore, the transmission elements 60, 61, 62, 63, 64, 65, 66, 67, 68, 69 cooperate with one another such that, if all the flaps 30, 31, 32, 33, 34, 35, 36, 37, 38, 39 are present during the evaluation process, the concatenated force transmission causes a chain action-reaction passing through all the transmission elements 60, 61, 62, 63, 64, 65, 66, 67, 68, 69 until reaching the stop element abutting with the stop 2 of the frame 2, indirectly preventing the actuator 5 from continuing to rotate, therefore causing a current/torque peak of said actuator 5.

Therefore, in the event that all the flaps 30, 31, 32, 33, 34, 35, 36, 37, 38, 39 are present during the evaluation process, as shown in Figures 15 and 16, when the flaps 30, 31, 32, 33, 34, 35, 36, 37, 38, 39 transition from a closed position, the situation shown in Figure 15, to an open position, the situation shown in Figure 16, the transmission element 60 associated with the first flap 30 rotates integrally with said first flap 30 such that it pivots ninety degrees, the actuating surface 601 of the transmission element 60 of the first flap 30 pressing at the end of said path on the actuated surface 620 of the transmission element 62 associated with the following flap 32, the actuating surface 621 of said transmission element 62 pressing on the actuated surface 630 of the transmission element 63 of the following flap 33, the actuating surface 631 of said transmission element 63 pressing on the actuated surface 640 of the transmission element 64 of the following flap 34, the actuating surface 641 of said transmission element 64 pressing on the actuated surface 650 of the transmission element 65 of the following flap 35, the actuating surface 651 of said transmission element 65 pressing on the actuated surface 660 of the transmission element 66 of the following flap 36, the actuating surface 661 of said transmission element 66 pressing on the actuated surface 670 of the transmission element 67 of the following flap 37, the actuating surface 671 of said transmission element 67 pressing on the actuated surface 680 of the transmission element 68 of the following flap 38, the actuating surface 681 of said transmission element 68 pressing on the actuated surface 690 of the transmission element 69 of the following flap 39, and the actuating surface 691 of said transmission element 69 pressing on the actuated surface 610 of the transmission element 61 of the last flap 31, such that the actuating surface 611 of the transmission element 61 of said last flap 31, which is the stop element of the diagnostic system, presses on the stop 20 of the frame 2. When the actuating surface 611 of the transmission element 61 of the last flap presses on the stop 20 of the frame 2, the movement of the actuator 5 in the direction in which said actuator 5 is rotating is prevented, since the transmission element 60 associated with the first flap 30 cannot continue to rotate in said direction due to the fact that the cooperation between the different transmission elements 60, 61, 62, 63, 64, 65, 66, 67, 68, 69 prevents this, and since the rotation of the first transmission element 60 is integral with the rotation of the first flap 30, said first flap 30 cannot continue to rotate either, and since all the flaps 30, 31, 32, 33, 34, 35, 36, 37, 38, 39 are coupled by means of the transmission part 4, none of the flaps 30, 31, 32, 33, 34, 35, 36, 37, 38, 39 can continue to rotate, therefore causing a current/torque peak of said actuator 5.

However, if, during the evaluation process, one of the flaps 30, 31, 32, 33, 34, 35, 36, 37, 38, 39 is absent, the chain reaction is interrupted or modified.

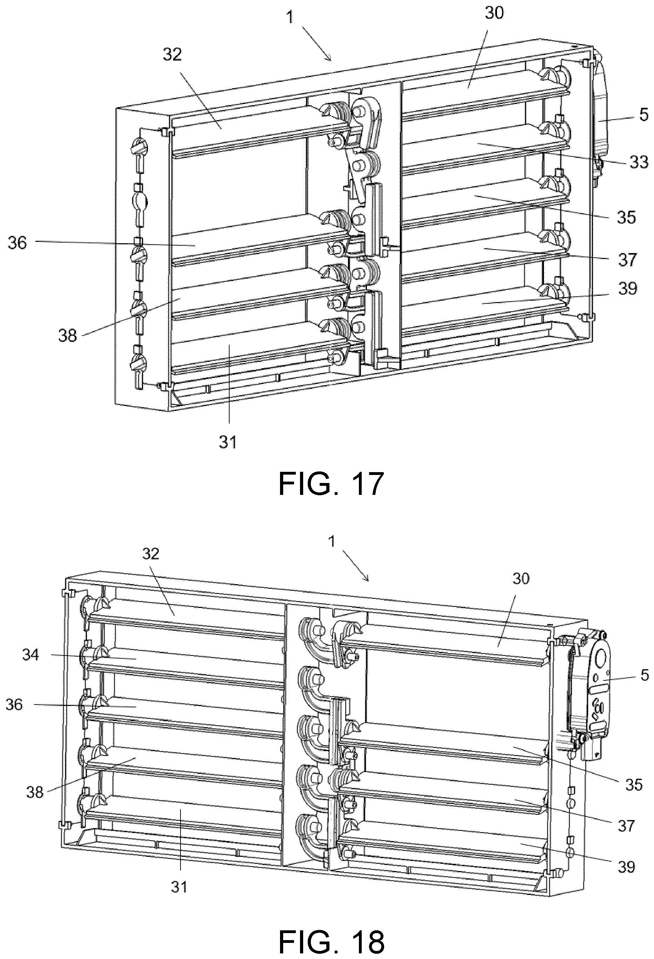

For example, Figure 17 shows a situation in which one of the intermediate flaps 34 is missing, and therefore the transmission element 64 associated with said intermediate flap 34 is also missing. In this situation, when the flaps 30, 31, 32, 33, 35, 36, 37, 38, 39 present pivot from the closed position to the open position, the transmission element 60 associated with the first flap 30 rotates together with said first flap 30 such that upon pivoting ninety degrees, the actuating surface 601 of the transmission element 60 of the first flap 30 presses on the actuated surface 620 of the transmission element 62 associated with the following flap 32, the actuating surface 621 of the transmission element 62 associated with said flap 32 pressing on the actuated surface 630 of the transmission element 63 associated with the following flap 33. However, in the absence of the transmission element 64 associated with the following flap 34, the concatenated force transmission is altered at this point. Depending on the additional rotation of the actuator 5 beyond the normal range of rotation before being stopped, the concatenated force transmission will be lost at this point or will be resumed when the actuating surface 631 contacts the actuated surface 650 of the following flap 65 present. In this case, the current/torque of the actuator 5 will not have a peak within the normal range of rotation of the actuator 5 but rather outside said range, the missing peak in the normal range of rotation indicating in either of the two situations the absence of at least one flap 30, 31, 32, 33, 34, 35, 36, 37, 38, 39.

In another example shown in Figure 18, another one of the intermediate flaps 33 is missing, and therefore the transmission element 63 associated with said intermediate flap 33 is also missing. In this situation, when the flaps 30, 31, 32, 34, 35, 36, 37, 38, 39 present transition from a closed position to an open position, the transmission element 60 associated with the first flap 30 rotates together with said first flap 30 such that upon pivoting ninety degrees, the actuating surface 601 of the transmission element 60 of the first flap 30 presses on the actuated surface 620 of the transmission element 62 associated with the following flap 32. However, in the absence of the transmission element 63 associated with the following flap 33, the concatenated force transmission is lost at this point, such that the actuating surface 611 of the transmission element 61 of the last flap 31 does not press on the stop 20 of the frame 2 when the actuator 5 rotates ninety degrees, and therefore said actuator 5 can continue to rotate beyond the normal range of rotation of the actuator 5. In this case, the current/torque of the actuator 5 will not have a peak within the normal range of rotation of the actuator 5, said missing peak indicating the absence of at least one flap 30, 31, 32, 33, 34, 35, 36, 37, 38, 39.

As explained above, in this second embodiment the first group of flaps 31, 32, 34, 36, 38 is arranged in one of the openings 205 of the frame 2 with a first end 310, 320, 340, 360, 380 pivotably coupled to a fourth hole 24 of a second wall of the central column 204 of the frame 2 and a second end 311, 321, 341, 361, 381 pivotably coupled to a second respective hole 22 of the second side 203 of the frame 2. In this second embodiment, each second hole 22 of the second side 203 of the frame 2 is communicated with a respective slot 220. When the flaps pivot between the closed position and the open position, the second end 311, 321, 341, 361, 381 of each flap 31, 32, 34, 36, 38 is arranged in the second respective hole 22. However, if one of the flaps 31, 32, 34, 36, 38 of the first group of flaps is uncoupled from the transmission part 4, i.e., if the pin 312, 322, 342, 362, 382 of said flap 31, 32, 34, 36, 38 is uncoupled from the respective hook of the transmission part 4, said flap 31, 32, 34, 36, 38, due to its weight distribution with respect to the pivoting shaft of the flap 31, 32, 34, 36, 38, pivots due to the effect of gravity to an angular position in which the second hole 22 of the second side 203 of the frame 2 is communicated with the respective slot 220, such that the second end 311, 321, 341, 361, 381 of the flap 31, 32, 34, 36, 38 is housed in said respective slot 220, causing an inclination of the flap 31, 32, 34, 36, 38 causing it to be uncoupled from the frame 2, the diagnostic system detecting the absence of said flap 31, 32, 34, 36, 38. Although in the figures in which the second embodiment is depicted, the first holes of the first side of the frame do not comprise said slot; in other possible embodiments not shown in the figures, said first holes will also comprise said slots so as to allow, in the event that one of the flaps of the second group of flaps is uncoupled from the transmission part, said flap to also be uncoupled from the frame.

## Claims

1. Shutter device for an air inlet of a vehicle, said shutter device (1) comprising
- a frame (2),
- a first flap (30), a last flap (31) and at least one intermediate flap (32, 33, 34, 35, 36, 37, 38, 39) pivotably coupled to said frame (2) and configured to pivot between a closed position and an open position,
- an actuator (5),
- a transmission part (4) coupled to the flaps (30, 31, 32, 33, 34, 35, 36, 37, 38, 39) and configured to transmit a movement of the actuator (5) to said flaps (30, 31, 32, 33, 34, 35, 36, 37, 38, 39), and
- a diagnostic system which allows the absence of at least one of the flaps (30, 31, 32, 33, 34, 35, 36, 37, 38, 39) to be detected during an evaluation process which is performed when the flaps (30, 31, 32, 33, 34, 35, 36, 37, 38, 39) pivot from the closed position to the open position and/or from the open position to the closed position,
**characterized in that** the diagnostic system comprises transmission elements (60, 61, 62, 63, 64, 65, 66, 67, 68, 69) associated with the flaps (30, 31, 32, 33, 34, 35, 36, 37, 38, 39) which cooperate with one another, causing a concatenated force transmission from the transmission element (60) associated with the first flap (30) to the transmission element (61) associated with the last flap (31) sequentially through the transmission elements (62, 63, 64, 65, 66, 67, 68, 69) associated with each of the intermediate flaps (32, 33, 34, 35, 36, 37, 38, 39), the transmission element (61) of the last flap (31) comprising a stop element which, by means of the concatenated force transmission, prevents, at the end of the evaluation process, the movement of the actuator (5) in the direction in which said actuator (5) is rotating, such that said diagnostic system detects the absence of at least one flap (30, 31, 32, 33, 34, 35, 36, 37, 38, 39) when the concatenated force transmission is interrupted or altered by the absence of the transmission element (60, 61, 62, 63, 64, 65, 66, 67, 68, 69) associated with said flap (30, 31, 32, 33, 34, 35, 36, 37, 38, 39).

2. Shutter device according to claim 1, wherein the stop element prevents, at the end of the evaluation process, the movement of the actuator (5) in the direction in which said actuator (5) is rotating by pressing on a stop (20) of the frame (2).

3. Shutter device according to claim 2, wherein the transmission element (60) of the first flap (30) is integral with said first flap (30), and the transmission elements (61, 62, 63, 64, 65, 66, 67, 68, 69) of the rest of the flaps (31, 32, 33, 34, 35, 36, 37, 38, 39) are pivotably coupled to the respective flap (31, 32, 33, 34, 35, 36, 37, 38, 39).

4. Shutter device according to claim 3, wherein the transmission element (60) of the first flap (30) comprises an arm with an actuating surface (601), and the transmission elements (61, 62, 63, 64, 65, 66, 67, 68, 69) of the rest of the flaps (31, 32, 33, 34, 35, 36, 37, 38, 39) comprise an arm with an actuated surface (610, 620, 630, 640, 650, 660, 670, 680, 690) and an actuating surface (611, 621, 631, 641, 651, 661, 671, 681, 691), the actuating surfaces (601, 611, 621, 631, 641, 651, 661, 671, 681, 691) of the transmission elements (60, 61, 62, 63, 64, 65, 66, 67, 68, 69) acting on the actuated surface (610, 620, 630, 640, 650, 660, 670, 680, 690) of the following transmission element (61, 62, 63, 64, 65, 66, 67, 68, 69), and the actuating surface (611) of the last flap (31) being the stop element.

5. Shutter device according to any of the preceding claims, wherein if a flap (30, 31, 32, 33, 34, 35, 36, 37, 38, 39) is uncoupled from the transmission part (4), said flap (30, 31, 32, 33, 34, 35, 36, 37, 38, 39) due to its weight distribution with respect to a pivoting shaft of the flap (30, 31, 32, 33, 34, 35, 36, 37, 38, 39) pivots due to the effect of gravity to an angular position in which one end (301, 311, 321, 331, 341, 351, 361, 371, 381, 391) of the shaft of the flap (30, 31, 32, 33, 34, 35, 36, 37, 38, 39) is housed in a slot (220), causing an inclination of the flap (30, 31, 32, 33, 34, 35, 36, 37, 38, 39) such that the flap (30, 31, 32, 33, 34, 35, 36, 37, 38, 39) is uncoupled from the frame (2), the diagnostic system detecting the absence of said flap (30, 31, 32, 33, 34, 35, 36, 37, 38, 39).

6. Shutter device according to any of the preceding claims, wherein the evaluation process is performed when the flaps (30, 31, 32, 33, 34, 35, 36, 37, 38, 39) pivot from the closed position to the open position.

7. Shutter device according to any of the preceding claims, wherein the shutter device (1) is configured to be arranged between the front grille and the engine of a vehicle, or to be arranged in the front part of the vehicle.

8. Vehicle comprising a shutter device (1) according to any of claims 1 to 7.

9. Detection method for detecting the absence of at least one flap (30, 31, 32, 33, 34, 35, 36, 37, 38, 39) of a shutter device (1) according to any of claims 1 to 7, wherein the concatenated force transmission is indirectly monitored by means of the current and/or the torque of the actuator (5) during the evaluation process.

10. Detection method according to claim 9, wherein an alarm signal is activated in the event that a current and/or torque peak is not observed when said actuator (5) performs a pre-established rotation or a pre-established time interval lapses.

## Patentansprüche

1. Verschlussvorrichtung für einen Lufteinlass eines Fahrzeuges, wobei die genannte Verschlussvorrichtung (1) Folgendes umfasst
- einen Rahmen (2),
- eine erste Klappe (30), eine letzte Klappe (31) und mindestens eine Zwischenklappe (32, 33, 34, 35, 36, 37, 38, 39), welche mit dem genannten Rahmen (2) schwenkbar gekoppelt sind und dazu ausgebildet sind, zwischen einer geschlossenen Stellung und einer offenen Stellung zu schwenken,
- ein Betätigungselement (5),
- ein Übertragungsteil (4), welches mit den Klappen (30, 31, 32, 33, 34, 35, 36, 37, 38, 39) gekoppelt ist und dazu ausgebildet ist, eine Bewegung des Betätigungselements (5) auf die genannten Klappen (30, 31, 32, 33, 34, 35, 36, 37, 38, 39) zu übertragen, und
- ein Diagnosesystem, welches es erlaubt, die Abwesenheit von mindestens einer der Klappen (30, 31, 32, 33, 34, 35, 36, 37, 38, 39) während eines Auswertungsprozesses zu detektieren, welches durchgeführt wird, wenn die Klappen (30, 31, 32, 33, 34, 35, 36, 37, 38, 39) von der geschlossenen Stellung in die offene Stellung und/oder von der offenen Stellung in die geschlossene Stellung schwenken,
**dadurch gekennzeichnet, dass** das Diagnosesystem mit den Klappen (30, 31, 32, 33, 34, 35, 36, 37, 38, 39) assoziierte Übertragungselemente (60, 61, 62, 63, 64, 65, 66, 67, 68, 69) umfasst, welche miteinander zusammenwirken, sodass eine verknüpfte Kraftübertragung vom Übertragungselement (60), welches mit der ersten Klappe (30) assoziiert ist, auf das Übertragungselement (61), welches mit der letzten Klappe (31) assoziiert ist, sequentiell über die Übertragungselemente (62, 63, 64, 65, 66, 67, 68, 69), welche mit jeder der Zwischenklappen (32, 33, 34, 35, 36, 37, 38, 39) assoziiert sind, bewirkt wird, wobei das Übertragungselement (61) der letzten Klappe (31) ein Anschlagelement umfasst, welches, mittels der verknüpften Kraftübertragung, am Ende des Auswertungsprozesses, die Bewegung des Betätigungselements (5) in die Richtung, in welche das genannte Betätigungselement (5) rotiert, verhindert, sodass das genannte Diagnosesystem die Abwesenheit von mindestens einer Klappe (30, 31, 32, 33, 34, 35, 36, 37, 38, 39) detektiert, wenn die verknüpfte Kraftübertragung durch die Abwesenheit vom Übertragungselement (60, 61, 62, 63, 64, 65, 66, 67, 68, 69), welches mit der genannten Klappe (30, 31, 32, 33, 34, 35, 36, 37, 38, 39) assoziiert ist, unterbrochen oder verändert wird.

2. Verschlussvorrichtung nach Anspruch 1, wobei das Anschlagelement, am Ende des Auswertungsprozesses, die Bewegung des Betätigungselements (5) in die Richtung, in welche das genannte Betätigungselement (5) rotiert, verhindert, indem auf einem Anschlag (20) des Rahmens (2) gedrückt wird.

3. Verschlussvorrichtung nach Anspruch 2, wobei das Übertragungselement (60) der ersten Klappe (30) in die genannte erste Klappe (30) integriert ist, und die Übertragungselemente (61, 62, 63, 64, 65, 66, 67, 68, 69) des Rests der Klappen (31, 32, 33, 34, 35, 36, 37, 38, 39) mit der jeweiligen Klappe (31, 32, 33, 34, 35, 36, 37, 38, 39) schwenkbar gekoppelt sind.

4. Verschlussvorrichtung nach Anspruch 3, wobei das Übertragungselement (60) der ersten Klappe (30) einen Arm mit einer Betätigungsfläche (601) umfasst, und die Übertragungselemente (61, 62, 63, 64, 65, 66, 67, 68, 69) des Rests der Klappen (31, 32, 33, 34, 35, 36, 37, 38, 39) einen Arm mit einer betätigten Fläche (610, 620, 630, 640, 650, 660, 670, 680, 690) und einer Betätigungsfläche (611, 621, 631, 641, 651, 661, 671, 681, 691) umfassen, wobei die Betätigungsflächen (601, 611, 621, 631, 641, 651, 661, 671, 681, 691) der Übertragungselemente (60, 61, 62, 63, 64, 65, 66, 67, 68, 69) auf die betätigte Fläche (610, 620, 630, 640, 650, 660, 670, 680, 690) des folgenden Übertragungselements (61, 62, 63, 64, 65, 66, 67, 68, 69) wirken, und wobei die Betätigungsfläche (611) der letzten Klappe (31) das Anschlagelement ist.

5. Verschlussvorrichtung nach einem der vorhergehenden Ansprüche, wobei, wenn eine Klappe (30, 31, 32, 33, 34, 35, 36, 37, 38, 39) vom Übertragungsteil (4) entkoppelt ist, die genannte Klappe (30, 31, 32, 33, 34, 35, 36, 37, 38, 39) aufgrund von deren Gewichtsverteilung in Bezug auf einen schwenkbaren Schaft der Klappe (30, 31, 32, 33, 34, 35, 36, 37, 38, 39) durch die Wirkung der Schwerkraft zu einer Winkelstellung schwenkt, in welcher ein Ende (301, 311, 321, 331, 341, 351, 361, 371, 381, 391) des Schaftes der Klappe (30, 31, 32, 33, 34, 35, 36, 37, 38, 39) in einer Aussparung (220) aufgenommen ist, wobei eine Neigung der Klappe (30, 31, 32, 33, 34, 35, 36, 37, 38, 39) bewirkt wird, sodass die Klappe (30, 31, 32, 33, 34, 35, 36, 37, 38, 39) vom Rahmen (2) entkoppelt ist, wobei das Diagnosesystem die Abwesenheit von der genannten Klappe (30, 31, 32, 33, 34, 35, 36, 37, 38, 39) detektiert.

6. Verschlussvorrichtung nach einem der vorhergehenden Ansprüche, wobei der Auswertungsprozess durchgeführt wird, wenn die Klappen (30, 31, 32, 33, 34, 35, 36, 37, 38, 39) von der geschlossenen Stellung in die offene Stellung schwenken.

7. Verschlussvorrichtung nach einem der vorhergehenden Ansprüche, wobei die Verschlussvorrichtung (1) dazu ausgebildet ist, zwischen dem Frontgitter und dem Motor eines Fahrzeuges angeordnet zu werden, oder im Vorderteil des Fahrzeuges angeordnet zu werden.

8. Fahrzeug umfassend eine Verschlussvorrichtung (1) nach einem der Ansprüche 1 bis 7.

9. Detektionsverfahren zum Detektieren der Abwesenheit von mindestens einer Klappe (30, 31, 32, 33, 34, 35, 36, 37, 38, 39) einer Verschlussvorrichtung (1) nach einem der Ansprüche 1 bis 7, wobei die verknüpfte Kraftübertragung mittels des Stroms und/oder des Drehmoments des Betätigungselements (5) während des Auswertungsprozesses indirekt überwacht wird.

10. Detektionsverfahren nach Anspruch 9, wobei ein Warnsignal aktiviert wird, im Falle, dass eine Strom- und/oder Drehmomentspitze nicht beobachtet wird, wenn das genannte Betätigungselement (5) eine vorab festgesetzte Rotation durchführt oder eine vorab festgesetzte Zeitspanne abläuft.

## Revendications

1. Dispositif d'obturation pour l'admission d'air d'un véhicule, ledit dispositif d'obturation (1) comprenant
- un cadre (2),
- un premier volet (30), un dernier volet (31) et au moins un volet intermédiaire (32, 33, 34, 35, 36, 37, 38, 39) couplés de manière pivotante audit cadre (2) et configurés pour pivoter entre une position fermée et une position ouverte,
- un actionneur (5),
- une pièce de transmission (4) couplée aux volets (30, 31, 32, 33, 34, 35, 36, 37, 38, 39) et configurée pour transmettre un mouvement de l'actionneur (5) auxdits volets (30, 31, 32, 33, 34, 35, 36, 37, 38, 39), et
- un système de diagnostic qui permet de détecter l'absence d'au moins l'un des volets (30, 31, 32, 33, 34, 35, 36, 37, 38, 39) lors d'un procédé d'évaluation qui est réalisé lorsque les volets (30, 31, 32, 33, 34, 35, 36, 37, 38, 39) pivotent de la position fermée jusqu'à la position ouverte et/ou de la position ouverte jusqu'à la position fermée,
**caractérisé en ce que** le système de diagnostic comprend des éléments de transmission (60, 61, 62, 63, 64, 65, 66, 67, 68, 69) associés aux volets (30, 31, 32, 33, 34, 35, 36, 37, 38, 39) qui coopèrent les uns avec les autres, ce qui provoque une transmission de force concaténée de l'élément de transmission (60) associé au premier volet (30) vers l'élément de transmission (61) associé au dernier volet (31) séquentiellement à travers les éléments de transmission (62, 63, 64, 65, 66, 67, 68, 69) associés à chacun des volets intermédiaires (32, 33, 34, 35, 36, 37, 38, 39), l'élément de transmission (61) du dernier volet (31) comprenant un élément de butée qui, par le biais de la transmission de force concaténée, empêche, à la fin du procédé d'évaluation, le mouvement de l'actionneur (5) dans le sens dans lequel tourne ledit actionneur (5), de telle sorte que ledit système de diagnostic détecte l'absence d'au moins un volet (30, 31, 32, 33, 34, 35, 36, 37, 38, 39) lorsque la transmission de force concaténée est interrompue ou modifiée par l'absence de l'élément de transmission (60, 61, 62, 63, 64, 65, 66, 67, 68, 69) associé audit volet (30, 31, 32, 33, 34, 35, 36, 37, 38, 39).

2. Dispositif d'obturation selon la revendication 1, dans lequel l'élément de butée empêche, à la fin du procédé d'évaluation, le mouvement de l'actionneur (5) dans le sens dans lequel tourne ledit actionneur (5) en appuyant sur une butée (20) du cadre (2).

3. Dispositif d'obturation selon la revendication 2, dans lequel l'élément de transmission (60) du premier volet (30) est solidaire dudit premier volet (30), et les éléments de transmission (61, 62, 63, 64, 65, 66, 67, 68, 69) du reste des volets (31, 32, 33, 34, 35, 36, 37, 38, 39) sont couplés de manière pivotante au volet (31, 32, 33, 34, 35, 36, 37, 38, 39) respectif.

4. Dispositif d'obturation selon la revendication 3, dans lequel l'élément de transmission (60) du premier volet (30) comprend un bras avec une surface d'actionnement (601), et les éléments de transmission (61, 62, 63, 64, 65, 66, 67, 68, 69) du reste des volets (31, 32, 33, 34, 35, 36, 37, 38, 39) comprennent un bras avec une surface actionnée (610, 620, 630, 640, 650, 660, 670, 680, 690) et une surface d'actionnement (611, 621, 631, 641, 651, 661, 671, 681, 691), les surfaces d'actionnement (601, 611, 621, 631, 641, 651, 661, 671, 681, 691) des éléments de transmission (60, 61, 62, 63, 64, 65, 66, 67, 68, 69) agissant sur la surface actionnée (610, 620, 630, 640, 650, 660, 670, 680, 690) de l'élément de transmission (61, 62, 63, 64, 65, 66, 67, 68, 69) suivant, et la surface d'actionnement (611) du dernier volet (31) étant l'élément de butée.

5. Dispositif d'obturation selon l'une quelconque des revendications précédentes, dans lequel si un volet (30, 31, 32, 33, 34, 35, 36, 37, 38, 39) est découplé de la pièce de transmission (4), ledit volet (30, 31, 32, 33, 34, 35, 36, 37, 38, 39), en raison de sa distribution de poids par rapport à un arbre de pivotement du volet (30, 31, 32, 33, 34, 35, 36, 37, 38, 39), pivote en raison de l'effet de la gravité jusqu'à une position angulaire dans laquelle une extrémité (301, 311, 321, 331, 341, 351, 361, 371, 381, 391) de l'arbre du volet (30, 31, 32, 33, 34, 35, 36, 37, 38, 39) est logée dans une fente (220), ce qui provoque un inclinaison du volet (30, 31, 32, 33, 34, 35, 36, 37, 38, 39) de telle sorte que le volet (30, 31, 32, 33, 34, 35, 36, 37, 38, 39) est découplé du cadre (2), le système de diagnostic détectant l'absence dudit volet (30, 31, 32, 33, 34, 35, 36, 37, 38, 39).

6. Dispositif d'obturation selon l'une quelconque des revendications précédentes, dans lequel le procédé d'évaluation est réalisé lorsque les volets (30, 31, 32, 33, 34, 35, 36, 37, 38, 39) pivotent de la position fermée jusqu'à la position ouverte.

7. Dispositif d'obturation selon l'une quelconque des revendications précédentes, dans lequel le dispositif d'obturation (1) est configuré pour être disposé entre la grille avant et le moteur d'un véhicule, ou pour être disposé dans la partie avant du véhicule.

8. Véhicule comprenant un dispositif d'obturation (1) selon l'une quelconque des revendications 1 à 7.

9. Procédé de détection pour détecter l'absence d'au moins un volet (30, 31, 32, 33, 34, 35, 36, 37, 38, 39) d'un dispositif d'obturation (1) selon l'une quelconque des revendications 1 à 7, dans lequel la transmission de force concaténée est surveillée indirectement par le biais du courant et/ou du couple de rotation de l'actionneur (5) lors du procédé d'évaluation.

10. Procédé de détection selon la revendication 9, dans lequel un signal d'alarme est activé dans le cas où un pic de courant et/ou de couple de rotation n'est pas observé lorsque ledit actionneur (5) réalise une rotation préétablie ou un intervalle de temps préétabli s'écoule.
